# EUROPEAN PATENT SPECIFICATION

(11) **EP 0 731 181 B1**
(45) Date of publication and mention of the grant of the patent: **19.07.2000**
(21) Application number: 95103498.2
(22) Date of filing: 10.03.1995
(51) Int. Cl.: C21D 7/06, C22F 1/00

(54) **Method of preventing abrasion at sliding portion of metal-product**
Verfahren zur Vermeidung des Abriebs gleitender Teile eines Metallproduktes
Procédé pour empêcher l'abrasion des pièces coulissantes d'un produit métallique

(43) Date of publication of application: 11.09.1996
(73) Proprietor: FUJI KIHAN CO., LTD., Nagoya, Aichi (JP)
(72) Inventor: Miyasaka, Yoshio, Kasugai-shi, Aichi (JP)
(74) Representative: Prato, Roberto

(56) References cited:
- GB-A- 1 562 455
- US-A- 4 217 769
- US-A- 4 258 084
- PATENT ABSTRACTS OF JAPAN vol. 011 no. 024 (C-399) ,23 January 1987 & JP-A-61 195919 (NIPPON STEEL CORP) 30 August 1986,
- PATENT ABSTRACTS OF JAPAN vol. 008 no. 100 (M-295) ,11 May 1984 & JP-A-59 014467 (KOBE SEIKOSHO KK) 25 January 1984,
- PATENT ABSTRACTS OF JAPAN vol. 013 no. 190 (C-593) ,8 May 1989 & JP-A-01 017817 (NHK SPRING CO LTD) 20 January 1989,
- J.S.ECKERSLEY ET AL 'SHOT PEENING THEORY AND APPLICATION' 1992 , IITT-INTERNATIONAL , GOURNAY SUR MARNE, FR PAGES 167-189, T.A.BRIERE "SHOT BLASTING SYSTEMS" * page 177; figure 16 *

## Description

### BACKGROUND OF THE INVENTION

### 1. Field of the Invention

This invention relates to a method for improving abrasion proof at the sliding portion of a metal-product such as a machine part by changing the metallic structure of the surface of the sliding portion, forming the surface condition of the sliding portion so as to have a predetermined roughness and forming oil sumps by which an oil film is seldom broken, by means of a shot-peening process on this surface.

### 2. Description of the Prior Art

Conventionally, in order to prevent abrasion on the surface of the sliding portion of a metal-product, hardness of the material of the metal-product was increased with a heat process such as hardening, carburization and nitriding, alternatively roughness of the surface of the metal-product was increased with a machine work such as cutting, grinding and polishing with a machine tool such as a lathe and fraise.

Moreover, an oil film was formed at the sliding portion of the metal-product by means of an oil feed process such as an oil bath process, splash process, drop process, cycling process and spray process for preventing abrasion at the sliding portion. In these oil feeding processes, are developed a method for effectively forming the oil film on the surface of the sliding portion of the metal-product and a method for improving quality of a lubricating oil for preventing the oil film being broken.

Further, concave portions were formed on the surface of the sliding portion of the metal-product so as to be oil sumps by means of scraping, cross polishing and the like. The scraping is a machine work by which the surface of the sliding portion of the metal-product is chipped with scraping such as spring scraping, plane scraping and cant scraping. On the other hand, the cross polishing is a polishing method by which the surface of the metal-product is polished by cross-honing at the high delivery speed of the honing with a honing machine. This cross polishing is applied for polishing an internal surface of a cylinder in an engine.

In the conventional method for preventing abrasion on the surface of the sliding portion of the metal-product, in order to obtain further effective abrasion proof, some of the above methods were combined, for example, roughness of the surface of the sliding portion of the metal-product was increased, hardness of the surface was increased by means of the heat process and an oil film was formed at the sliding portion by means of several kinds of oil feeding process. For example, GB 1 562 455 discloses a process for providing an oil retaining surface on a metallic article comprising a hard chromium plating of a base material surface which has been previously roughened by steel shot blasting.

However, following problems are remained in the above conventional methods for preventing abrasion on the surface of the sliding portion of the metal-product.
(1) When the surface of the sliding portion of the metal-product is hardened by means of the heat process, a strain appears in the metal-product. This causes a problem that it takes much time to correct its form, in some cases, the metal-product may be an inferior good having a form which can not be corrected.
   In the metal-product, when the surface of its base metal or that of its sliding portion is hardened by means of the heat process such as hardening, carburisation and nitriding, the metal-product is lowered in toughness to be brittle, which causes a problem that pitching is occurred. For example, if the metal-product is a gear, pitching is occurred at the corner of the end of each gear-teeth which is the sliding portion of the gear.
(2) The above mentioned oil feeding methods cause a problem that apparatus for feeding the oil are complicated resulting in high costs.
(3) In the method for forming the oil sumps on the surface of the sliding portion of the metal-product by means of the scraping machine works, when the surface of the metal-product is too hard, it is difficult to perform the scraping machine works. Thus, the heat process for increasing the hardness of the surface of the metal-product can not be perfectly carried out, so that the abrasion proof can not be improved sufficiently. Accordingly, when the sliding portion of the metal-product is sliding for long time, the oil sumps formed on the sliding portion tend to be abraded or deformed, which causes a problem that the oil film is broken. Further, under some abrasion-conditions at the sliding portion, the sliding portion needs adjustment or the metal-product itself needs replacement.
   Since large number of oil sump can not be formed by means of the scraping machine works, when the metal-product is sliding for long time, the oil film is broken. Thus, the lubricating oil must be replaced or supplied periodically.
(4) On the surface worked by means of the machine work such as cutting, grinding and polishing, cross sectional shape of rough portion is formed so as to have indented pattern with acute angles. Then, when the surface is sliding while the lubricating oil is supplied there, the lubricating oil is flown, due to capillary phenomenon, to the acute angled tip end of each concave portion in the rough-surface by a bearing pressure generated by sliding, which causes a problem that the oil film is broken. The same problem is caused when the cross polishing is effected for the surface.

### SUMMARY OF THE INVENTION

The present invention has been developed for solving the above problems. The object of the present invention thereby is to provide a method for preventing abrasion at a sliding portion of a metal-product by forming on the surface of the sliding portion numberless of concave oil sump each having a very small circular arc-shaped cross section, and by changing a structure near the surface of the sliding portion of the metal-product so as to be a minuted metal structure having large hardness and toughness by means of a shot-peening process. The present invention is based on knowledge that shots injected to the surface of the metal-product by means of the shot-peening process produces heat on the surface of the metal-product and the temperature of the surface of the metal-product rises as injection velocity of the shots is increased.

In order to attain the above object, the present invention provides a method for preventing abrasion of a metal-product as claimed in claim 1.

It is favorable that the jet velocity of the shots is 100 to 200 m/sec and injection pressure is 3 to 6 kg/cm² since the surface of the sliding portion of the metal-product can be surely heated to the temperature same as or higher than the A₃ transformation temperature or the recrystallization temperature. Then, it is favorable that the size of each shot is 28 to 125µ, the diameter of a nozzle for injecting the shots is 5 to 9 mm, and the injection distance is 150 to 200 mm since the high injection velocity can be obtained and the oil sumps are formed so as to have the favorable shape, size and roughness. Further, in this case, the injection density is increased thereby the very small oil sumps can be surely formed on the surface of the sliding portion of the metal-product.

At the sliding portion of the metal-product, the above shot-peening process can be carried out for one surface which is sliding so as to contact with another surface. However, it is favorable that this process is carried out for the both surfaces.

The lubricating oil is supplied to the surface of the sliding portion of the metal-product for which the above shots are injected, so that the oil film can be formed on the surface of the sliding portion of the metal-product. Thus, the abrasion at the sliding portion of the metal-product can be prevented.

By forming the shape of each shot to be closer to an accurate sphere, the shot-peening process can be performed further effectively. As the material of the particle, there can be metal, such as ceramic and glass, having the hardness same as or larger than that of the metal-product. For example, steal beads, glass beads or alumina-silica beads which are harder than the glass beads are used as the shots.

It is favorable that each concave portion has the top shape of a substantial circle and its diameter is 0.1 to 5µ. Further, the surface of the sliding portion of the metal-product can be formed so as to be rough by the injection of the shots. For example, the surface is formed so as to have the concave portions each having the size of 0.1 µ or larger.

As explained after, when the shape of each shot is the accurate sphere, each concave portion having a suitable circular arc-shaped cross section can be formed on the surface of the sliding portion of the metal-product, thereby the effect of the present invention is enlarged. However, when the shape of each shot is not the sphere, the internal surface of each concave portion can not be smooth, for example, V-shaped notches are formed on the internal surface of the concave portion. In this condition, the surface tension of the lubricating oil is small, resulting in that the effect is decreased to some extent.

The above shot-peening process is preferably carried out twice or more times for the sliding portion of the metal-product. In this case, it is preferable that the second and subsequent shot-peening processes are carried out with higher pressures and shorter injection distances comparing those of the first shot-peening process for allowing that the surface of the sliding portion of the metal-product has the suitable roughness, that the numberless of oil sump having preferable shapes can be accurately formed, and that the surface of the sliding portion of the metal-product can be surely heated to the temperature same as or higher than the A₃ transformation temperature or the recrystallization temperature. In the second and subsequent shot-peening processes, the alumina-silica beads are preferably used since they have extremely large hardness.

By the impulse force of the shots, the surface of the metal-product is heated to the temperature same as or higher than the A₃ transformation temperature of the base metal in the case that the metal-product is iron-carbon steel such as carbon steel, or to the temperature same as or higher than the recrystallization temperature of the base metal in the case that the metal-product is a nonferrous metal such as aluminum or copper alloy. Thus, the metallic structure of the surface layer is softened so that very small concave portions having the small circular-arc shaped cross sections are formed on the surface of the sliding portion due to the impulse force of each shot having the shape of substantially accurate sphere. Further, the structure of the surface layer at the sliding portion is minuted thereby the internal stress is increased so that the structure can have large hardness and toughness. Before the shot-peening process, the surface of the sliding portion of the metal-product is provided with concave portions each having a V-shaped cross section. However, the above shot-peening process changes the shape of each concave portion from V-shape to circular-arc shape on its cross section.

Accordingly, when the lubricating oil is supplied to the surface of the sliding portion of the metal-product, the lubricating oil forms oil droplets in the above concave portions each having the circular-arc shaped cross section due to the surface tension of the lubricating oil. Further, since the numberless of very small concave portions each having the circular-arc shaped cross section can be accurately formed, each oil droplet is formed so as to correspond to the size of each concave portion, and the oil droplets which are adjacent each other and formed in the concave portions respectively can be connected resulting in the stable oil sumps formed on the whole of the surface of the sliding portion. Then, when the sliding portion of the metal-product is sliding and the bearing pressure is applied there in the same way as normal use of the metal-product, the surface tension of each oil droplet is maintained and the oil film is not broken in sliding for long time so that the abrasion of the sliding portion of the metal-product can be prevented.

Further, the metallic structure of the surface layer of the sliding portion of the metal-product is formed so as to be minuted and have high internal stress, hardness and toughness, thus, even if the metal-product is sliding for long time, the shape of each concave portion is not changed. Therefore, the oil film is stable and seldom broken so that the abrasion of the sliding portion of the metal-product can be prevented.

### BRIEF DESCRIPTION OF THE DRAWINGS

The object and advantages of the invention will become understood from the following detailed description of preferred embodiments thereof in connection with the accompanying drawings in which like numerals designate like elements, and in which:
Fig. 1 is a perspective view schematically showing a surface of a metal-product for which a shot-peening process is carried out according to the present invention;
Fig. 2 is a cross sectional view schematically showing the surface of the metal-product according to the present invention;
Fig. 3 is an enlarged view based on a microphotograph (x100) of the surface of an aluminum metal-product for which a shot-peening process is carried out according to the present invention;
Fig. 4 is an enlarged view based on a microphotograph (x500) of the surface of the same metal-product as that of Fig. 3; and
Fig. 5 is a view totally showing gravity blast work apparatus used in example of the present invention.

### DETAILED DESCRIPTION OF THE PREFERRED EMBODIMENTS

### Example 1

Under the process conditions showing in the following table, the shot-peening process was carried out for the surface of the sliding portion of a uniform motion joint ball bearing as metal-product.

**Table 1-1**

| Shot-Peening Process Conditions of Example 1 | |
|---|---|
| Shot-Peening Apparatus | Powder Blast Apparatus |
| Metal-Product | Uniform Motion Joint Ball Bearing (External Diameter ⌀20) |
| Metal-Product Material | SUJ (High Carbon Chrome Bearing Steel) |
| Injection Pressure | 4.5 kg/cm² |
| Injection Nozzle Diameter | 9 mm |
| Injection Velocity | 120 m/sec |
| Injection Distance | 200 mm |
| Process Time | 200 products / 10 minutes |
| Shot Material | Alumina-Silica Bead |
| Shot Diameter | 40µ (# 400) |
| Shot Hardness | About 1000 Hv (Moh's Hardness 7.5) |

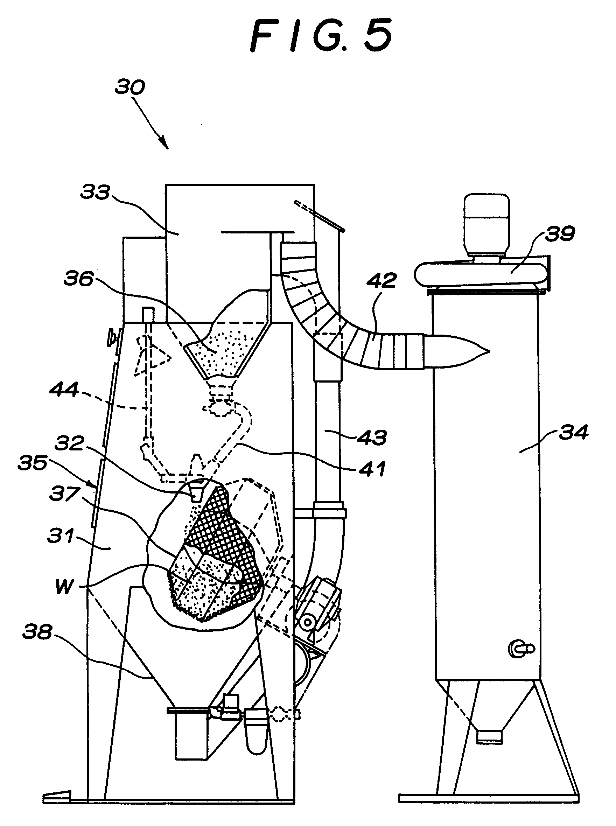

The blast apparatus for micro powder in Example 1 was used for injecting abrasives in the form of micro powder to the surface of each metal-product in the shot-peening process. Each micro powder means the abrasive particle with the size of 5 to 80 µ. Then, if the micro powders are accumulated so as to form a conical mountain shape, the micro powders are not flown to the foot of the mountain. In an extreme case, the adsorption force between the powders is so large that an angle with which the powders are accumulated approaches the right angle. That differs from the case of abrasives each having the normal particle size. The blast apparatus for micro powder is constructed so that vibration and agitation are carried out for the micro powders contained in a tank by means of an air vibrator, thus a predetermined quantity of micro powder is uniformly supplied to an injection nozzle. The apparatus has the almost same structure as that of the gravity blast apparatus shown in Fig. 5 which will be explained below.

Now, an explanation of the gravity blast apparatus 30 shown in Fig. 5 will be substituted for an explanation of the blast apparatus for micro powder.

The gravity blast apparatus 30 is provided with a nozzle 32 for injecting abrasives 36 such as shots into a cabinet 31 equipped with a gate 35. Through the gate 35, the metal-products W which correspond to objects to be machine worked are introduced and discharged. A pipe 44 connected to the nozzle 32 is communicated with a compressor (not shown) from which compressed air is supplied. A hopper 38 is provided at the lower portion of the cabinet 31. The lowest end of the hopper 38 is communicated, through a conduit 43, with the upper side of a recovery tank 33 which is provided at the upper side of the cabinet 31. The lower end of the recovery tank 33 is communicated, through a pipe 41, with the above nozzle 32. The abrasives contained in the recovery tank 33 are fallen therefrom due to gravity force or predetermined pressure so as to be injected into the cabinet 31 together with the compressed air supplied through the above pipe 44 to the nozzle 32.

The shots 36 are introduced into the recovery tank 33. Each shot 36 is manufactured by a ceramic-silica bead having the size of 40 µ and the hardness of about 1000 Hv (Moh's Hardness 7.5), which is higher than that of the base metal of the uniform motion joint ball bearing as the object W to be machine-worked. Each shot 36 has the shape of the accurate sphere or almost accurate sphere. By forming the shape of each shot 36 to be closer to the accurate sphere, the larger effect can be obtained.

Two hundreds of uniform motion joint ball bearing as the metal-products are introduced from the gate 35 into a barrel 37 in the cabinet 31. While the barrel 37 is rotated at the rotation speed of 3 rotations / minute, the shots are injected with the injection pressure of 4.5 kg / cm². injection velocity of 120 m/sec and injection distance of 200 mm to the uniform motion joint ball bearings reversal rotated in the barrel 37. This barrel 37 is a basket-shaped container having an octagonal cross section. The above nozzle 32 is secured in the cabinet so as to be directed toward the barrel 37.

The injected shots 36 and dusts generated by the injection of these shots 36 to the uniform motion joint ball bearings are fallen to the hopper 38 provided at the lower portion of the cabinet 31. Then, the shots 36 and dusts are moved up, by an upward gas stream in the conduit 43, into the recovery tank where the shots 36 are recovered. By a gas stream in the recovery tank 33, the dusts in the recovery tank 33 are introduced from the upper end of the recovery tank 33, through a pipe 42, to a dust collector 34 where the dusts are collected at its bottom. Then, air from which the dusts are removed is discharged through a fan 39 provided at the upper portion of the dust collector 34.

Under the above conditions, rise in temperature is occurred near the surface of the sliding portion of each uniform motion joint ball bearing. Thus, very small concave portions 52 having the circular-arc shaped cross sections are formed accurately on the surface of the sliding portion of each metal-product. Further, the structure of the surface layer of the sliding portion is minuted so as to have a large internal stress, hardness and toughness.

In Example 1, the desirable result could be obtained as shown in Table 1-2 (Comparison Example 1; Comparison of Treated Product in Example 1 with Untreated Product) which will be disclosed later. Now, the reason of this will be explained closely.

First, the rise in temperature occurred when the shots were injected to the surface of each metal-product will be explained.

The velocity of the shots before their collision is different from that after their collision. The difference depends on the hardness of the metal-product and that of the shot. At any rate, the velocity of the shots after their collision is decreased comparing that before their collision. According to the rule of energy conservation, most of energy produced by decrease of the velocity is converted to heat energy and the rest of it is converted to sound energy. The collision causes deformation of collided portion thereby the heat energy is used in the form of internal friction occurred there. Since heat conversion is carried out at only the portion which is deformed by collision of the shots, a small area is heated to the high temperature.

In other words, local temperature increase is occurred near the surface of each metal-product, although the weight of the portion which is deformed and heated by the collision of the shots is increased in proportion to the velocity of the shots before their collision, because the weight of the portion is very small against the whole weight of the metal-products.

In the collision of the shots having large surface hardness with the metal-products having also large surface hardness, the restitution coefficient e approaches one. Then, in this case, since the deformed portion is small, the local temperature increase is further noticeable.

The temperature increase is proportion to the velocity of the shots before the collision, thus, the injection velocity of the shots must be increased in order to obtain the large temperature increase. Accordingly, the shot diameter is preferably determined to be short of 20 to 200µ. In such short diameter, the shots can be injected at the high injection velocity same as or larger than 50 m/sec. Moreover, the surface of each metal-product can be heated uniformly.

Due to the impulse force of the shots, the temperature of the surface layer of the sliding portion of each metal-product is increased to be same as or higher than the A₃ transformation temperature of the base metal in the case that each metal-product is iron-carbon steel such as high carbon chrome bearing steel. Then, the metallic structure of the surface layer is softened so that the very small concave portions 52 having the small circular-arc shaped cross sections are formed on the surface of the sliding portion due to the impulse force of each shot having the shape of almost sphere. While these concave portions 52 having the small circular-arc shaped cross sections are formed in this way, the structure of the surface layer of the sliding portion of each metal-product is minuted thereby the internal stress is increased so that the structure has have large hardness and toughness.

A metal-product to which the above shot-peening process is not given (this metal-product will be expressed hereafter by "untreated product") is compared with the metal-product to which the above shot-peening process is given (this metal-product will be hereafter expressed by "treated product"). Then, from this comparison, it is clear that the structure condition of the surface layer of the sliding portion of each treated product is minuted. The cross sectional shape of the surface layer of the sliding portion of each metal-product before the shot-peening process has V-shaped concave portions or very small grooves. However, such V-shaped concave portions or very small grooves are eliminated when the concave portions 52 having circular arc shaped cross sections are formed on the surface of the sliding portion of each treated product due to the above shot-peening process.

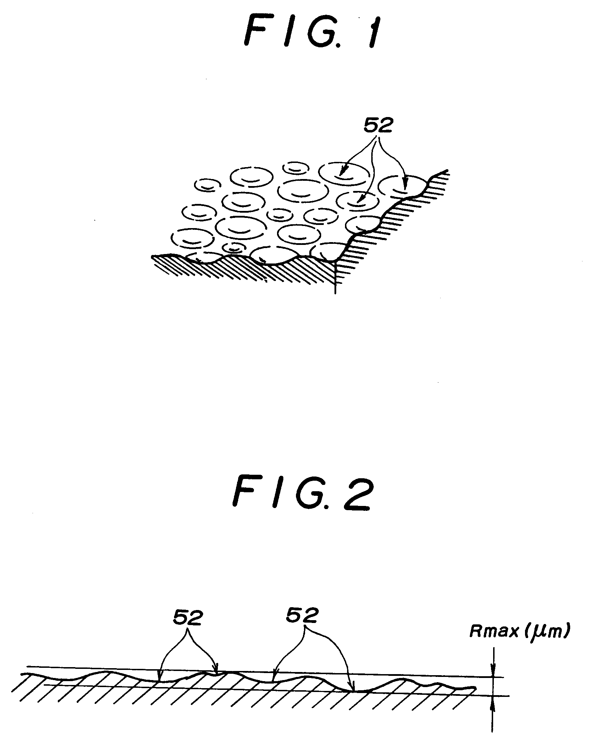

Fig. 1 is a perspective view for schematically illustrating the surface condition of each treated product. Further, as shown in Fig. 2, schematic illustration of the surface condition of each treated product on the cross section indicates a smooth curve.

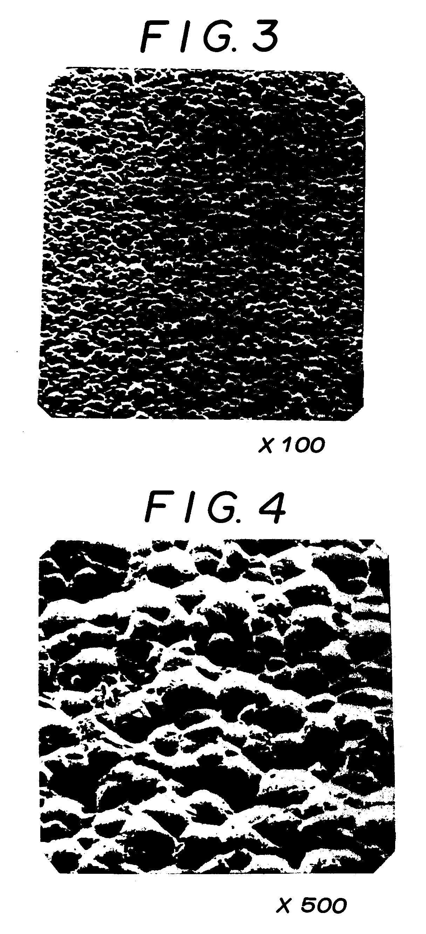

Figs. 3 and 4 show microphotographs of the surface of each metal-product which is produced from aluminum and treated in Example 4 explained below. The surface condition of the metal-product which is produced from iron-carbon steel and treated in Example 1 is basically similar to the surface shown in Figs. 3 and 4.

Therefore, when the lubricating oil is supplied to the surface of the sliding portion of the metal-products, oil droplets are formed from the lubricating oil on the surface of each concave portion 52 having the circular-arc shaped cross section. Then, since the numberless of concave portion 52 each having a very small circular arc-shaped cross section are accurately formed on the surface of the sliding portion as shown in Fig. 1, the adjacent oil droplets are connected each other so that the stable oil film is formed on the whole of surface of the sliding portion. Accordingly, even if the sliding portion of the metal-product is sliding and the bearing pressure is applied there, the surface tension of each oil droplet is maintained and the oil film is prevented from being broken in sliding for long time.

On the other hand, in the case that the untreated product is provided with, at its sliding portion, concave portions having V-shaped cross sections as stated above, the lubricating oil is flown to these concave portions having V-shaped cross sections. Particularly, it is known that, since the concave portions having V-shaped cross sections are formed so as to have the indented pattern due to the cutting and grinding, when the bearing pressure is applied to the sliding portion, the lubricating oil is flown along the grooves of the indented pattern of the concave portions having V-shaped cross sections, thereby the lubricating oil looses its surface tension and the oil film on the surface of the sliding portion is broken.

If there were pointed parts on the surface between the concave portions 52, the bearing pressure applied to the sliding portion of each metal-product would cause the braking of the oil film. However, as shown in Fig. 2, since the surface of the treated product has no pointed portion, the oil film is prevented from being broken.

The metallic structure of the surface layer of the sliding portion of each metal-product is minuted thereby the internal stress is increased so that the structure has large hardness and toughness. Therefore, in the metal-product, the sliding portions get to fit each other while they are sliding for long time to be rubbed each other, thereby frictional resistance at the sliding portions are decreased. Further, each concave portion 52 is not deformed. Therefore, even if the sliding is performed for long time, the oil film is stable so as to be prevented from being broken. From the comparison of untreated product of the uniform motion joint ball bearing and treated product of that in this Example, it is clear that the shot-peening process carried out in this Example is very effective. Here is Table 1-2 for indicating Comparison Example 1.

**Table 1-2**

| Comparison Example 1 Comparison between Treated Products by the Example 1 and Untreated one | | |
|---|---|---|
| | Untreated Product | Treated Product |
| Surface Roughness | 0.6 to 0.4 Rmax(µm) | 1.2 to 1.0 Rmax(µm) |
| Surface Toughness | 750 Hv | 1150 Hv |
| Surface Layer Internal Stress | 700 MPa | 1100 MPa |
| Abrasion Test (Time) hr | 150 hrs | 400 hrs |
| (Result) | Abrasion (Peeling) | No Abrasion |

The abrasion test was carried out by loading untreated products and treated products in the actual apparatus respectively for rotation at the rotation speed of 3000 rpm. The lubricating oil was mission oil.

According to the result of the abrasion test shown in Table 1-2, in the case of the untreated product, peeling was occurred at retainers of inner and outer rings of each ball bearing after operation of 150 hrs, resulting in abnormal abrasion, while in the case of the treated product, abrasion was not occurred after operation of 400 hrs. In this Comparison Example, operation of the abrasion test had been performed for only 400 hrs, because the effect of the process of Example 1 of the present invention could be sufficiently proved.

The surface hardness of the treated product was about 1.5 times as large as that of the untreated product and the surface internal stress of the treated product was about 1.5 times as large as that of the untreated product. As explained before, this means that the structure of the surface layer at the sliding portion of the metal-product was minuted thereby the internal stress was increased and the hardness became large.

The roughness of the surface of the treated product was larger than that of the untreated product by small amount. This difference is not factor for improving the abrasion proof of the sliding portion of the metal-product. As explained before, the surface condition and metallic structure condition of the metal-product have large influence against the abrasion proof of the sliding portion. Since the roughness of the treated product was about 1.2 to 1.0 Rmax(µm), it was found that each concave portion formed on the surface of the sliding portion had the small depth of same as or smaller than 1.2µ m.

Now, as for other Examples, conditions of the shot-peening processes and comparisons of metal-products (treated products) for which the above shot-peening processes were carried out and the metal-products (untreated products) for which the above shot-peening processes were not carried out will shown in tables, respectively.

### Example 2

In Example 2, the shot-peening process was carried out for a speed reducer needle roller having the diameter of 4 mm and the length of 50 mm. As shown, in the following tables, conditions of the shot-peening process as well as Comparison Example of the treated product under these conditions and the untreated product.

**Table 2-1**

| Shot-Peening Process Conditions of Example 2 | |
|---|---|
| Shot-Peening Apparatus | Powder Blast Apparatus |
| Metal-Product | Speed Reducer Needle Roller(⌀4 x 50L) |
| Metal-Product Material | SUJ (High Carbon Chrome Bearing Steel) |
| Injection Pressure | 4.5 kg/cm² |
| Injection Nozzle Diameter | 9 mm |
| Injection Velocity | 110 m/sec |
| Injection Distance | 200 mm |
| Process Time | 400 products / 15 minutes |
| Shot Material | Alumina-Silica Bead |
| Shot Diameter | About 60µ (# 300) |
| Shot Hardness | About 1000 Hv (Moh's Hardness 7.5) |

**Table 2-2**

| Comparison Example 2 Comparison of Treated Product in Example 2 and Untreated Product | | |
|---|---|---|
| | Untreated Product | Treated Product |
| Surface Roughness | 0.8 to 0.6 Rmax (µm) | 0.6 to 0.4 Rmax(µm) |
| Surface Toughness | 700 Hv | 1100 Hv |
| Surface Layer Internal Stress | 500 MPa | 1350 MPa |
| Abrasion Test(Time) hr | 200 hrs | 400 hrs |
| (Result) | Abrasion (Peeling) | No Abrasion |

The abrasion test was carried out by loading untreated products and treated products in the actual apparatus respectively for rotation at the rotation speed of 3800 rpm. The lubricating oil was machine oil.

According to the result of the abrasion test, in the case of the untreated product, peeling was occurred at the surface of the sliding portion of the needle roller after operation of 250 hrs, resulting in abnormal abrasion, while in the case of the treated product, abrasion was not occurred after operation of 400 hrs. In this Comparison Example, operation of the abrasion test had been performed for only 400 hrs.

Unlikely the case of Example 1, the surface hardness of the treated product was smaller than the untreated product, while, as shown in Table 2-2, the surface hardness and the surface internal stress of the treated product were far larger than those of the untreated product. This means that, the difference of the surface roughness is not factor for improving the abrasion proof of the sliding portion of the metal-product, and the surface condition and metallic structure condition of the metal-product have large influence against the improvement of the abrasion proof of the metal-product. Since the roughness of the treated product was about 0.6 to 0.4 Rmax(µm) it was found that each concave portion formed on the surface of the sliding portion had the small depth of same as or smaller than 0.6 µm.

### Example 3

In Example 3, the shot-peening processes were performed in two steps; the first step and the second step for a machine tool spline shaft having the diameter of 50 mm and the length of 600 mm. As shown, in the following tables, conditions of the shot-peening processes as well as Comparison Example of the treated product under these conditions and the untreated product.

**Table 3-1**

| Shot-Peening Process Conditions of the First Steps in Example 3 | |
|---|---|
| Shot-Peening Apparatus | Straight Hydraulic Blast Apparatus |
| Metal-Product | Machine Tool Spline Shaft (⌀50 x 600L) |
| Metal-Product Material | SCM (Chrome Molybdenum Steel) |
| Injection Pressure | 5 kg /cm² |
| Injection Nozzle Diameter | 5 mm |
| Injection Velocity | 200 m/sec |
| Injection Distance | 200 mm |
| Injection Time | 3 min / 1 direction x 3 directions |
| Process Time | 1 product / 9 minutes |
| Shot Material | Steal Bead |
| Shot Diameter | About 60µ (# 300) |
| Shot Hardness | 800 Hv |

**Table 3-2**

| Shot-Peening Process Conditions of the Second Steps in Example 3 | |
|---|---|
| Shot-Peening Apparatus | Gravity Blast Apparatus |
| Injection Pressure | 5 .5 kg/cm² |
| Injection Nozzle Diameter | 9 mm |
| Injection Velocity | 150 m/sec |
| Injection Distance | 150 mm |
| Injection Time | 2 min/1 direction x 3 directions |
| Process Time | 1 product / 6 minutes |
| Shot Material | Alumina-Silica Bead |
| Shot Diameter | About 60µ (# 300) |
| Shot Hardness | About 1000 Hv (Moh's Hardness 7.5) |

**Table 3-3**

| Comparison Example 3 Comparison of Treated Product in Example 3 and Untreated Product | | |
|---|---|---|
| | Untreated Product | Treated Product |
| Surface Roughness | 4.0 to 2.0 Rmax(µm) | 3.0 to 2.0 Rmax(µm) |
| Surface Toughness | 700 Hv | 1400 Hv |
| Surface Layer Internal Stress | 500 MPa | 1350 MPa |
| Abrasion Test(Time) hr | 200 hrs | 400 hrs |
| (Result) | Abnormal Abrasion | No Abrasion |

The abrasion test was carried out by loading untreated products and treated products in the actual apparatus respectively for reciprocating movement at the velocity of 600 m/sec. The lubricating oil was machine oil.

According to the result of the abrasion test, in the case of the untreated product, abnormal abrasion was occurred at the surface of the spline portion of the spline shaft after operation of 200 hrs, while in the case of the treated product, abrasion was not occurred after operation of 400 hrs. In this Comparison Example, operation of the abrasion test had been performed for only 400 hrs.

The surface hardness of the treated product was about 2 times as large as that of the untreated product and the surface internal stress of the treated product was about 2.7 times as large as that of the untreated product. This means that, as stated before, the structure of the surface layer of the sliding portion of the metal-product was minuted thereby the internal stress was increased and the hardness became large.

The roughness of the surface was larger comparing Example 1 and Example 2. Since the roughness of the treated product was about 3.0 to 2.0 Rmax (µm), it was found that each concave portion formed on the surface of the sliding portion had the small depth of same as or smaller than 3.0µm.

### Example 4

In Example 4, the shot-peening process was carried out for a cam groove. As shown, in the following tables, conditions of the shot-peening process as well as Comparison Example of a treated product of Example 4 and an untreated product.

**Table 4-1**

| Shot-Peening Process Conditions of Example 4 | |
|---|---|
| Shot-Peening Apparatus | Powder Blast Apparatus |
| Metal-Product | Air Conditioner Aluminum Part (Cam Groove) (10 x 5 x 200L mm) |
| Metal-Product Material | Aluminum |
| Injection Pressure | 3.0 kg/cm² |
| Injection Nozzle Diameter | 9 mm |
| Injection Velocity | 80m/sec |
| Injection Distance | 200 mm |
| Process Time | 1 product / 1 minute |
| Shot Material | Glass Bead |
| Shot Diameter | 40µ (# 400) |
| Shot Hardness | About 700 Hv (Moh's Hardness 6) |

**Table 4-2**

| Comparison Example 4 Comparison of Treated Product in Example 4 and Untreated Product | | |
|---|---|---|
| | Untreated Product | Treated Product |
| Surface Roughness | 0.8 to 0.6 Rmax(µm) | 1.6 to 0.8 Rmax(µm) |
| Surface Toughness | 170 Hv | 300 Hv |
| Surface Layer Internal Stress | - | - |
| Abrasion Test(Time) hr | 100 hrs | 200 hrs |
| (Result) | Abnormal Abrasion | No Abrasion |

Unlikely Examples 1, 2 and 3, the material of the metal-product of Example 4 is aluminum, which is not iron-carbon steel. However, in also Example 4, the result caused from the process of the present invention shows a large effect of the present invention.

As stated in Example 1, due to the impulse force of the injected shots, the temperature of the surface layer of the sliding portion of the metal-product was increased to the same as or higher than the recrystallisation temperature of aluminum. Accordingly, as shown in Figs. 3 and 4, the metallic structure of the surface layer was softened so that the concave portions having the small circular-arc shaped cross sections were formed due to the collision of the shots each having the shape of almost sphere. In Figs. 3 and 4, black colored portions designate the concave portions.

Further, due to the impulse force of the shots, the structure of the surface layer of the sliding portion of the metal-product was minuted so that the treated product can have the large surface hardness comparing with the untreated product.

According to the result of the abrasion test, in the case of the untreated product, abnormal abrasion was occurred at the surface of the cam groove of the air conditioner aluminum part after operation of 100 hrs, while in the case of the treated product, abrasion was not occurred after operation of 200 hrs. In this Comparison Example, operation of the abrasion test had been performed for only 200 hrs.

Since the roughness of the surface of the treated product was about 1.6 to 0.8 Rmax(µm), it was found that each concave portion formed on the surface of the sliding portion had the small depth of same as or smaller than 1.6µm.

### Example 5

In Example 5, the shot-peening process was carried out for an armature (electromagnetic part) of a solenoid having the diameter of 15 mm. As shown, in the following tables, conditions of the shot-peening process as well as Comparison Example of the treated product of Example 5 and the untreated product.

**Table 5-1**

| Shot-Peening Process Conditions of Example 5 | |
|---|---|
| Shot-Peening Apparatus | Gravity Blast Apparatus |
| Metal-Product | Armature of Solenoid (⌀15) |
| Metal-Product Material | Stainless Steel |
| Injection Pressure | 3.0 kg/cm² |
| Injection Nozzle Diameter | 9 mm |
| Injection Velocity | 80 m/sec |
| Injection Distance | 150 mm |
| Process Time | 1 product / 10 secs |
| Shot Material | Glass Bead |
| Shot Diameter | 125 µ (# 180) |
| Shot Hardness | About 700 Hv (Moh's Hardness 6) |

**Table 5-2**

| Comparison Example 5 Comparison of Treated Product in Example 5 and Untreated Product | | |
|---|---|---|
| | Untreated Product | Treated Product |
| Surface Roughness | 0.6 to 0.4 Rmax (µm) | 0.8 to 0.6 Rmax (µm) |
| Surface Toughness | 350 Hv | 450 Hv |
| Surface Layer Internal Stress | - | 400 MPa |
| Abrasion Test(Number) | 100,000 Times | 100,000 Times |
| (Result) | Abrasion | No Abrasion |

The abrasion test was carried out by contacting the untreated product and treated product for 0.5 seconds per one contacting, respectively. The lubricating oil was one available in market ("CRC 5-56" : trade name manufactured by CRC Chemicals Inc.).

According to the result of the abrasion test, in the case of the untreated product, abnormal abrasion was occurred after 100,000 tests, while in the case of the treated product, abrasion was not occurred after 100,000 tests. The treated product could be available after 1,000,000 abrasion tests.

The surface hardness of the treated product was about 1.3 times as large as that of the untreated product. This means that, as stated before, the structure of the surface layer of the sliding portion of the metal-product was minuted thereby the internal stress was increased and the hardness became large.

Since the roughness of the treated product was about 0.8 to 0.6 Rmax(µm), it was found that each concave portion formed on the surface of the sliding portion had the small depth of same as or smaller than 0.8µm.

### Example 6

In Example 6, the shot-peening processes were performed in two steps; the first step and the second step for a machine tool shaft metal bearing having the diameter of 50 mm and the length of 50 mm. As shown, in the following tables, conditions of the shot-peening processes as well as Comparison Example of a treated product of Example 6 under these conditions and an untreated product.

**Table 6-1**

| Shot-Peening Process Conditions of the First Steps in Example 6 | |
|---|---|
| Shot-Peening Apparatus | Powder Blast Apparatus |
| Metal-Product Machine | Tool Shaft Metal Bearing (⌀50 x 50L) |
| Metal-Product Material | Melting Injection Super Hard Material |
| Injection Pressure | 4.0 kg/cm² |
| Injection Nozzle Diameter | 9 mm |
| Injection Velocity | 120 m/sec |
| Injection Distance | 200 mm |
| Process Time | 1 product/30secs |
| Shot Material | WA |
| Shot Diameter | 28µ (#600) |
| Shot Hardness | About 2000 Hv |

**Table 6-2**

| Shot-Peening Process Conditions of the Second Steps in Example 6 | |
|---|---|
| Shot-Peening Apparatus | Powder Blast Apparatus |
| Injection Pressure | 5.0kg/cm² |
| Injection Nozzle Diameter | 9 mm |
| Injection Velocity | 160 m/sec |
| Injection Distance | 150 mm |
| Process Time | 1 product/40secs |
| Shot Material | Alumina-Silica Bead |
| Shot Diameter | 40µ (# 400) |
| Shot Hardness | About 1000 Hv (Moh's Hardness 7.5) |

Although the metal-product was super hard material, the hardness of the product could be enlarged by using the WA (Whilte Alundum) as the shots for the shot-peening process in the first step. But the surface condition of the metal-product had the intended pattern with acute angles, so each valley portion of this pattern had a V-shaped cross section. Accordingly, in the second step, by using the alumina-silica beads as the shots for the shot-peening process, concave portions each having the circular-arc shaped cross section were formed. Hence, the surface can be formed to be smooth and have the large hardness.

**Table 6-3**

| Comparison Example 3 Comparison of Treated Product in Example 6 and Untreated Product | | |
|---|---|---|
| | Untreated Product | Treated Product |
| Surface Roughness | 0.5 to 0.3 Rmax(µm) | 0.8 to 0.6 Rmax(µm) |
| Surface Toughness | 1300 Hv | 1500 Hv |
| Surface Layer Internal Stress | - | - |
| Abrasion Test (Time) hr | 10,000 hrs | 100,000 hrs |
| (Result) | Abnormal Abrasion | No Abrasion |

The abrasion test was carried out by loading untreated product and treated product in the actual apparatus respectively for rotation at the rotation velocity of 5000 rpm. The lubricating oil was machine oil.

According to the result of the abrasion test, in the case of the untreated product, abnormal abrasion was occurred at the surface of the shaft metal bearing after operation of 10,000 hrs, while in the case of the treated product, abrasion was not occurred after operation of 100,000 hrs. In this Comparison Example, operation of the abrasion test had been performed for only 100,000 hrs.

Since the roughness of the treated product was about 0.8 to 0.6 Rmax(µm), it was found that each concave portion formed on the surface of the sliding portion had the small depth of same as or smaller than 0.8µm.

### Example 7

In Example 7, the shot-peening processes were performed in two steps; the first and second steps, respectively for an engine gear having the diameter of 100 mm and the length of 30 mm. As shown, in the following tables, conditions of blast work processes as well as Comparison Example of a treated product of Example 7 and an untreated product in the following tables.

**Table 7-1**

| Shot-Peening Process Conditions of the First Steps in Example 6 | |
|---|---|
| Shot-Peening Apparatus | Straight Hydraulic Blast Apparatus |
| Metal-Product | Engine Gear(⌀100 x 30L) |
| Metal-Product Material | SNCM(Nickel Chrome Molybdenum Steel) |
| Injection Pressure | 5.0 kg/cm² |
| Injection Nozzle Diameter | 5 mm |
| Injection Velocity | 200 m/sec |
| Injection Distance | 200 mm |
| Process Time | 1 product / 60 secs, three directions |
| Shot Material | Steal Bead |
| Shot Diameter | About 60µ (# 300) |
| Shot Hardness | 800 Hv |

**Table 7-2**

| Shot-Peening Process Conditions of the Second Steps in Example 7 | |
|---|---|
| Shot-Peening Apparatus | Powder Blast Apparatus |
| Injection Pressure | 5.0kg/cm² |
| Injection Nozzle Diameter | 9 mm |
| Injection Velocity | 140 m/sec |
| Injection Distance | 150 mm |
| Process Time | 1 product / 45 secs, 3 directions |
| Shot Material | Alumina-Silica Bead |
| Shot Diameter | About 60µ (#300) |
| Shot Hardness | About 1000 Hv (Moh's Hardness 7.5) |

**Table 7-3**

| Comparison Example 3 Comparison of Treated Product in Example 7 and Untreated Product | | |
|---|---|---|
| | Untreated Product | Treated Product |
| Surface Roughness | 4.0 to 3.0 Rmax(µm) | 3.0 to 2.0 Rmax(µm) |
| Surface Toughness | 750 Hv | 1200 Hv |
| Surface layer Internal Stress | 700 MPa | 1500 MPa |
| Abrasion Test(Time) hr | 20 hrs | 200 hrs |
| (Result) | Abrasion (peeling) | No Abrasion |

The abrasion test was carried out by loading untreated product and treated product in the actual apparatus respectively for rotation at the rotation velocity of 6000 rpm. The lubricating oil was mission oil.

According to the result of the abrasion test, in the case of the untreated product, pitching was occurred on the surface of the engine gear and the surface was abraded, while in the case of the treated product, pitching was not occurred and there was no abrasion after operation of 200 hrs. In this Comparison Example, operation of the abrasion test had been performed for only 200 hrs.

The surface hardness of the treated product was about 1.6 times as large as that of the untreated product and the surface internal stress of the treated product was about 2.1 times as large as that of the untreated product. This means that, as stated before, the structure of the surface layer of the sliding portion of the metal-product was minuted thereby the internal stress was increased and the hardness became large.

Since the roughness of the treated product was about 0.8 to 0.6 Rmax(µm), it was found that each concave portion formed on the surface of the sliding portion had the small depth of same as or smaller than 0.8µm.

The treated products, engine gears of this Example were inter-engaged and rotated at the rotation speed of 5000 to 8000 rpm. The temperature of the above gear just after the start of rotation was about 100 °C. In this situation, the gears are rotated for about 1 hour, the temperature of the lubricating oil which is supplied for forming an oil film on the surface of each gear was decreased so that the rotation noise of the gears was decreased.

Alternatively, after the heat process such as carburisation was performed for the surface of the engine gear, the shot-peening process was performed for the resultant under the same conditions as those of Example 7. Thus, the treated product obtained from this modified example was similar to that of Example 7. Precisely, by means of about one hour of the rotation of the engine gear treated in this modified example, the temperature of the oil was lowered and the rotation noise was decreased.

As is known from the above explanation in Example 7, the structure of the surface layer of the gear was minuted to have large surface hardness and toughness by the shot-peening process in the present invention. Accordingly, the inter-engaging gears got to fit each other, resulting in smooth inter-engagement and small frictional resistance. Hence the rotation noise of the gears was decreased and the temperature of the oil was decreased. Further, since the surface hardness of the gear was large, even if the gears inter-engaged for long time, each concave portion formed on each gear's surface could keep its own shape. Accordingly, the surface tension of the oil film was maintained so as not to be decreased and the oil film could keep its condition so as to be stable. Finally, as shown in Table 7-3, the preferable result could be obtained from the abrasion test.

### Example 8

In Example 8, the shot-peening process was carried out for a crank shaft having the diameter of 50 mm and the length of 20 mm. As shown, in the following tables, conditions of the shot-peening process as well as Comparison Example of the treated product of Example 8 and the untreated product.

**Table 8-1**

| Shot-Peening Process Conditions of Example 8 | |
|---|---|
| Shot-Peening Apparatus | Powder Blast Apparatus |
| Metal-Product | Crank Shaft(⌀50 x 20L) |
| Metal-Product Material | Copper Alloy |
| Injection Pressure | 3.0 kg/cm² |
| Injection Nozzle Diameter | 9 mm |
| Injection Velocity | 100 m/sec |
| Injection Distance | 200 mm |
| Process Time | 1 product / 20 secs |
| Shot Material | Glass Bead |
| Shot Diameter | 40µ (# 400) |
| Shot Hardness | About 700 Hv (Moh's Hardness 6) |

**Table 8-2**

| Comparison Example 8 Comparison of Treated Product in Example 8 and Untreated Product | | |
|---|---|---|
| | Untreated Product | Treated Product |
| Surface Roughness | 0.4 to 0.2 Rmax (µm) | 0.6 to 0.4 Rmax (µm) |
| Surface Toughness | 160 Hv | 300 Hv |
| Surface Layer Internal Stress | - | - |
| Abrasion Test(Time) hr | 200 hrs | 400 hrs |
| (Result) | Abnormal Abrasion | No Abrasion |

The material of the metal-product in Example 8 is copper alloy which is a nonferrous metal. In the same way as Example 4 where the metal-product is aluminum, due to impulse force caused by the collision of the shots, the temperature of the surface layer of the sliding portion of the metal-product is increased to the same as or higher than the recrystallization temperature of the copper which is the main metal. Thus, the structure of the surface layer is softened so that very small concave portions having circular-arc shaped cross sections are formed by the collision of the shots having the shapes of almost spheres. Further, due to the impulse force caused by the collision of the shots, the structure of the surface layer of the sliding portion of the metal-product of copper alloy are minuted so that the treated product can have the large surface hardness.

The abrasion test was carried out by loading untreated product and treated product in the actual apparatus respectively for rotation at the rotation velocity of 6000 rpm. The lubricating oil was engine oil.

According to the result of the abrasion test, in the case of the untreated product, abnormal abrasion was occurred at the surface of the sliding portion of the crank shaft after operation of 200 hrs, while in the case of the treated product, abrasion was not occurred after operation of 400 hrs. In this Comparison Example, operation of the abrasion test had been performed for only 400 hrs.

The surface hardness of the treated product was about 1.9 times as large as that of the untreated product. This means that, as stated before, the structure of the surface layer of the sliding portion of the metal-product was minuted thereby the hardness became large.

Since the roughness of the treated product was about 0.6 to 0.4 Rmax(µm), it was found that each concave portion formed on the surface of the sliding portion had the small depth of same as or smaller than 0.6µm.

### Example 9

In Example 9, the shot-peening processes were carried out for motorcycle engine (250 cc) parts (Example 9-1 to 9-5).

As shown, in the following tables, conditions of the shot-peening processes as well as Comparison Example of the treated products of Example 9 and the untreated products as for motorcycle engine parts.

**Table 9-1-1**

| Shot-Peening Process Conditions of Example 9-1 | |
|---|---|
| Shot-Peening Apparatus | Gravity Blast Apparatus |
| Metal-Product | Crank Shaft |
| Metal-Product Material | FCD(Spherical Graphite Cast Iron) Carburized Product |
| Injection Pressure | 4.0 kg/cm² |
| Injection Nozzle Diameter | 9 mm |
| Injection Velocity | 130 m/sec |
| Injection Distance | 200 mm |
| Process Time | 1 product / 80 secs |
| Shot Material | Alumina-Silica Bead |
| Shot Diameter | About 60µ (# 300) |
| Shot Hardness | About 1000 Hv (Moh's Hardness 7.5) |

**Table 9-1-2**

| Shot-Peening Process Conditions of Example 9-2 | |
|---|---|
| Shot-Peening Apparatus | Powder Blast Apparatus |
| Metal-Product | Piston |
| Metal-Product Material | Aluminum Alloy |
| Injection Pressure | 3.0 kg/cm² |
| Injection Nozzle Diameter | 9 mm |
| Injection Velocity | 100 m/sec |
| Injection Distance | 200 mm |
| Process Time | 1 product / 60 secs |
| Shot Material | Alumina-Silica Bead |
| Shot Diameter | About 40µ (# 400) |
| Shot Hardness | About 1000 Hv (Moh's Hardness 7.5) |

**Table 9-1-3**

| Shot-Peening Process Conditions of Example 9-3 | |
|---|---|
| Shot-Peening Apparatus | Gravity Blast Apparatus |
| Metal-Product | Con'rod |
| Metal-Product Material | SCM(Chrome Molybdenum Steel) |
| Injection Pressure | 3.0 kg/cm² |
| Injection Nozzle Diameter | 9 mm |
| Injection Velocity | 100 m/sec |
| Injection Distance | 150 mm |
| Process Time | 1 product / 30 secs |
| Shot Material | Alumina-Silica Bead |
| Shot Diameter | About 60µm(# 300) |
| Shot Hardness | About 1000 Hv (Moh's Hardness 7.5) |

**Table 9-1-4**

| Shot-Peening Process Conditions of Example 9-4 | |
|---|---|
| Shot-Peening Apparatus | Gravity Blast Apparatus |
| Metal-Product | Cylinder |
| Metal-Product Material | FCD(Spherical Graphite Cast Iron) |
| Injection Pressure | 4.0 kg/cm² |
| Injection Nozzle Diameter | 9 mm |
| Injection Velocity | 130 m/sec |
| Injection Distance | 200 mm |
| Process Time | 1 product / 60 secs |
| Shot Material | Alumina-Silica Bead |
| Shot Diameter | About 60µ (# 300) |
| Shot Hardness | About 1000 Hv (Moh's Hardness 7.5) |

**Table 9-1-5**

| Shot-Peening Process Conditions of Example 9-5 | |
|---|---|
| Shot-Peening Apparatus | Gravity Blast Apparatus |
| Metal-Product | Gear |
| Metal-Product Material | SCM(Chrome Molybdenum Steel) Carburized Product |
| Injection Pressure | 6.0 kg/cm² |
| Injection Nozzle Diameter | 9 mm |
| Injection Velocity | 150 m/sec |
| Injection Distance | 150 mm |
| Process Time | 1 product / 60 secs |
| Shot Material | High-Speed Bead |
| Shot Diameter | About 40µ (# 400) |
| Shot Hardness | About 1000 to 1300 Hv |

**Table 9-2-1**

| Comparison Example 9-1 Comparison of Treated Product in Example 9-1 and Untreated Product (Crank Shaft) | | |
|---|---|---|
| | Untreated Product | Treated Product |
| Surface Roughness | 2.0 Rmax(µm) | 1.5 Rmax(µm) |
| Surface Toughness | 700 Hv | 1000 Hv |
| Surface Layer Internal Stress | 500 MPa | 800 MPa |
| Abrasion Test(Time) hr | 200 hrs | 400 hrs |
| (Result) | Abnormal Abrasion | No Abrasion |

**Table 9-2-2**

| Comparison Example 9-2 Comparison of Treated Product in Example 9-2 and Untreated Product (Piston) | | |
|---|---|---|
| | Untreated Product | Treated Product |
| Surface Roughness | 3.0 to 5.0 Rmax(µm) | 3.0 to 2.0 Rmax(µm) |
| Surface Toughness | 300 Hv | 450 Hv |
| Surface Layer Internal Stress | - | - |
| Abrasion Test (Time) hr | 200 hrs | 400 hrs |
| (Result) | Abnormal Abrasion | No Abrasion |

**Table 9-2-3**

| Comparison Example 9-3 Comparison of Treated Product in Example 9-3 and Untreated Product (Con'rod) | | |
|---|---|---|
| | Untreated Product | Treated Product |
| Surface Roughness | 3.0 Rmax(µm) | 2.0 Rmax(µm) |
| Surface Toughness | 750 Hv | 1100 Hv |
| Surface Layer Internal Stress | - | - |
| Abrasion Test (Time) hr | 200 hrs | 400 hrs |
| (Result) | Damage | No Damage |

**Table 9-2-4**

| Comparison Example 9-4 Comparison of Treated Product in Example 9-4 and Untreated Product (Cylinder) | | |
|---|---|---|
| | Untreated Product | Treated Product |
| Surface Roughness | 3.0 Rmax( µm) | 2.0 Rmax(µm) |
| Surface Toughness | 450 Hv | 550 Hv |
| Surface Layer Internal Stress | - | - |
| Abrasion Test(Time) hr | 200 hrs | 400 hrs |
| (Result) | Wound | No Wound |

**Table 9-2-5**

| Comparison Example 9-5 Comparison of Treated Product in Example 9-5 and Untreated Product (Gear) | | |
|---|---|---|
| | Untreated Product | Treated Product |
| Surface Roughness | 3.0 Rmax(µm) | 1.5 Rmax(µm) |
| Surface Toughness | 750 Hv | 1100 Hv |
| Surface Layer Internal Stress | 600 MPa | 1300 MPa |
| Abrasion Test(Time) hr | 200 hrs | 400 hrs |
| (Result) | Abnormal Abrasion | No Abrasion |

Each abrasion test was carried out by loading untreated product and treated product in the actual apparatus respectively for rotation at the rotation velocity of 10000 rpm. The lubricating oil was mission oil for the gear and engine oil for other metal-products.

According to the result of the abrasion tests, in the case of each untreated product of the above parts, abnormal abrasion was occurred at the whole surface of its sliding portion after operation of 200 hrs, while in the case of each treated product, abrasion was not occurred after operation of 400 hrs. In these Comparison Examples, operation of the abrasion test had been performed for only 400 hrs.

The surface hardness of each treated product was larger than the untreated product and the internal stress of the surface layer of the treated product was also larger than those of the untreated product. As stated before, this means that the structure of the surface layer of the metal-product was minuted by means of the shot-peening process so that the hardness became large. Further, it was confirmed that the surface roughness of the treated product was larger than that of the untreated product.

When the engine provided with treated products of Example 9 was rotated at 10, 000 rpm, comparing with the case of the engine provided with the untreated products, the engine noise was decreased, and the temperature of the mission oil was lower by 10 °C.

It is known from the above explanation that, by means of the shot-peening process under the conditions of Example 9, the noise from the general engine was decreased. Further, the maximum rotation number of the engine provided with the untreated products was 16, 000 rpm, while that of the engine provided with the treated products was 17, 800 rpm. Precisely, the durability of the former engine was 1.125 times as large as that of the latter engine.

As explained above, by means of the shot-peening process, on the surface of the sliding portion of the metal-product, the oil sumps consisted of very small concave portions each having small circular-arc shaped cross section are formed. Accordingly, by supplying the lubricating oil to the surface of the sliding portion of the metal-product, the lubricating oil forms, due to its surface tension, oil droplets each being contained in each concave portion having arc-circular cross section so that the stable oil film is formed on the whole surface of the sliding portion. Further, when the bearing pressure is applied to the sliding portion of the metal-product, each oil droplet in each concave portion maintains its surface tension and the oil film is prevented from being broken in the sliding for long time. Thus, the method for efficiently preventing the abrasion on the surface of the sliding portion of the metal-product can be obtained.

The metallic structure of the surface layer of the sliding portion of the metal-product is changed, by means of the shot-peening process, to the structure which is minuted and has the large internal stress, hardness and toughness. Accordingly, even if the sliding portion is sliding for long time, each concave portion maintains its shape so as not to be changed.

Accordingly, the oil film is formed so as to be stable and prevented from being broken. Therefore the method for preventing abrasion of the surface of the sliding portion of the metal-product can be obtained. Since the friction coefficient of the surface of the sliding portion of the metal-product can be decreased, frictional heat generated at the sliding portion is inhibited, it should be said that the temperature is lowered thereby thermal expansion is not occurred in the sliding portion. Hence it is not necessary to consider the thermal expansion in preparation of designing the dimension of the metal-product, resulting in high dimension-accuracy of the metal-product. Thus, the sliding velocity such as the velocity of the rotation at the sliding portion of the metal-product can be increased, which satisfies recently enlarging requirement for increasing velocity, rotation velocity and loading in the field of metal-product. Further, at the sliding portion of the metal-product, its surface can be sliding smoothly, thereby, vibration noise or other noise caused from this sliding can be decreased. That is to say, the durability of the apparatus provided with the metal-product is very long, and consideration for environmental problem as for noise is carried out sufficiently in operation with the apparatus.

When high pressure is applied repeatedly to a certain portion, this portion is damaged due to local fatigue, which is a pitching phenomenon. Then, since the sliding portion of the metal-product has large hardness and toughness, such pitching phenomenon can be prevented.

Thus the broadest claims that follow are not directed to a machine that is configure in a specific way. Instead, the broadest claims are intended to protect the heart or essence of this breakthrough invention. This invention is clearly new and useful. Moreover, is was not obvious to those of ordinary skill in the art at the time it was made, in view of the prior art when considered as a whole.

Moreover, in view of the revolutionary nature of this invention, it is clearly a pioneering invention. As such, the claims that follow are entitled to very broad interpretation so as to protect the heart of this invention, as a matter of law.

It is also to be understood that the following claims are intended to cover all of the generic and specific features of the invention herein described, and all statements of the scope of the invention which, as a matter of language, might be said to fall therebetween.

## Claims

1. A method for preventing abrasion of a metal-product, made of ferrous metal having an A₃ transformation temperature or made of nonferrous metal having a recrystallization temperature, said metal product having a portion which is to be subjected to sliding action, said portion having a surface, said method comprising subjecting said portion of said metal-product to shot peening thereby resulting in formation of a plurality of concave sumps on said surface of said portion, each sump having a circular arc-shaped cross section;
**characterized in that**
(i)- said shot peening is carried out in such a manner so as to result in an increase in temperature at the surface of said portion of said metal-product to a temperature at least as high as
(a) A₃, the transformation temperature of the metal of said metal product in the case that said metal-product is made of a ferrous metal or
(b) the recrystallization temperature of said metal of said metal product in the case that said metal-product is made of a nonferrous metal;
(ii)- said shot-peening comprising projecting shots under pressure at a velocity at least 50 m/sec whereby said shots impact against said surface of said portion, said shots having a hardness at least as high as that of said metal-product, a substantially spherical shape, and size of 20 to 200 µm.

2. A method for preventing abrasion according to claim 1, further comprising subjecting said surface of said portion of said metal- product to at least one more further shot- peening.

3. A method for preventing abrasion according to claim 1 or 2, wherein said shot-peening process is performed for at least one surface of said sliding portion sliding so as to contact with another surface.

4. A method for preventing abrasion according to any claim selected from claim 1 to 3, further comprising supplying lubricating oil to said surface of said portion of said metal-product so that an oil film is formed on said surface.

5. A method for preventing abrasion according to any claim selected from claim 1 to 4, wherein said shots are spherical.

6. A method for preventing abrasion according to any claim selected from claim 1 to 5, wherein said shots are expelled at a velocity of 100 to 200 m/sec.

7. A method for preventing abrasion according to any claim selected from claim 1 to 6, wherein said size of said shots is 28 to 125 µm.

8. A method for preventing abrasion according to any claim selected from claim 1 to 7, wherein said shots are expelled from a nozzle having a internal diameter of 5 to 9 mm.

9. A method for preventing abrasion according to any claim selected from claim 1 to 8, wherein the distance from said nozzle to said surface of said portion is 150 to 200 mm.

10. A method for preventing abrasion according to any claim selected from claim 1 to 9, wherein said shots are expelled at a pressure of 3 to 6 kg/cm².

11. A method for preventing abrasion according to any claim selected from claim 1 to 10, wherein said shots are manufactured from metal, ceramic or glass.

12. A method for preventing abrasion according to claim 2, wherein, in said further shot- peening, shots are expelled at a pressure at least as high as the pressure of the first prior shot- peening.

13. A method for preventing abrasion according to claim 2, wherein after said shot-peening is performed wherein shots are expelled from a nozzle, said one more shot-peening is performed wherein shots are expelled from a nozzle and the distance from said nozzle to said surface is at least as small as the distance in prior shot- peening.

14. A method for preventing abrasion according to claim 2, wherein, said further shot- peening is performed using alumina- silica beads as said shots.

15. A method for preventing abrasion according to any claim selected from claim 1 to 10, wherein each concave sump has a substantially circular top perimeter of 0.1 to 5 µm.

16. A method for preventing abrasion according to any claim selected from claim 1 to 15, wherein said surface of said portion has a roughness higher than that of said surface before said shot- peening.

17. A method for preventing abrasion according to claim 16, wherein, after said shot-peening, said surface has a roughness at least as high as 0.1 µm.

## Patentansprüche

1. Verfahren zur Vermeidung eines Abriebs eines Metallproduktes, das aus einem Eisenmetall mit einer Transformationstemperatur A₃ hergestellt ist oder aus einem Nichteisenmetall mit Rekristallisationstemperatur hergestellt ist, wobei das Metallprodukt einen Bereich aufweist der einer Gleitwirkung ausgesetzt werden soll, wobei der Bereich eine Oberfläche aufweist, umfassend, den Bereich des Metallprodukts einem Kugelstrahlen zu unterziehen, wodurch sich die Bildung einer Mehrzahl von konkaven Senken auf der Oberfläche des Bereichs ergibt, wobei jede Senke einen runden, bogenförmigen Querschnitt hat,
dadurch gekennzeichnet, daß
(i)- das Kugelstrahlen in der Weise durchgeführt wird, daß es zu einem Temperaturanstieg an der Oberfläche des Bereichs des Metallprodukts auf eine Temperatur führt, die wenigstens so hoch ist, wie
(a) A₃, die Transformationstemperatur des Metalls des Metallprodukts, in dem Falle, daß das Metallprodukt aus einem Eisenmetall hergestellt ist, oder
(b) die Rekristallisationstemperatur des Metalls des Metallprodukts, in dem Falle, daß das Metallprodukt aus einem Nichteisenmetall hergestellt ist,
(ii)- das Kugelstrahlen Druckgeschosse mit einer Geschwindigkeit von wenigstens 50 m/s umfaßt, wodurch die Geschosse auf der Oberfläche des Bereichs einschlagen, wobei die Geschosse eine Härte von der Stärke, wie wenigstens derjenigen des Metallprodukts, eine im wesentlichen sphärische Gestalt und eine Größe von 20 bis 200 µm haben.

2. Verfahren zur Vermeidung eines Abriebs nach Anspruch 1, ferner mit einem Unterziehen der Oberfläche des Bereichs des Metallprodukts wenigstens einer weiteren Kugelstrahlung.

3. Verfahren zur Vermeidung eines Abriebs nach Anspruch 1 oder 2, in welchem der Kugelstrahlvorgang für wenigstens eine Oberfläche des Gleitbereichs durchgeführt wird, die für einen Gleitkontakt mit einer anderen Oberfläche bestimmt ist.

4. Verfahren zur Vermeidung eines Abriebs nach einem Anspruch ausgewählt aus Anspruch 1 bis 3, ferner mit einem Zuführen eines Schmieröls an die Oberfläche des Bereichs des Metallprodukts, so daß ein Ölfilm auf der Oberfläche gebildet wird.

5. Verfahren zur Vermeidung eines Abriebs nach einem Anspruch ausgewählt aus Anspruch 1 bis 4, in welchem die Geschosse sphärisch sind.

6. Verfahren zur Vermeidung eines Abriebs nach einem Anspruch ausgewählt aus Anspruch 1 bis 5, in welchem die Geschosse mit einer Geschwindigkeit von 100 bis 200 m/s ausgetrieben werden.

7. Verfahren zur Vermeidung eines Abriebs nach einem Anspruch ausgewählt aus Anspruch 1 bis 6, in welchem die Größe der Geschosse 28 bis 125 µm beträgt.

8. Verfahren zur Vermeidung eines Abriebs nach einem Anspruch ausgewählt aus Anspruch 1 bis 7, in welchem die Geschosse aus einer Düse mit einem Innendurchmesser von 5 bis 9 mm ausgetrieben werden.

9. Verfahren zur Vermeidung eines Abriebs nach einem Anspruch ausgewählt aus Anspruch 1 bis 8, in welchem der Abstand von der Düse zur Oberfläche des Bereichs 150 bis 200 mm beträgt.

10. Verfahren zur Vermeidung eines Abriebs nach einem Anspruch ausgewählt aus Anspruch 1 bis 9, in welchem die Geschosse bei einem Druck von 3 bis 6 kg/cm² ausgetrieben werden.

11. Verfahren zur Vermeidung eines Abriebs nach einem Anspruch ausgewählt aus Anspruch 1 bis 10, in welchem die Geschosse aus Metall, Keramik oder Glas hergestellt werden.

12. Verfahren zur Vermeidung eines Abriebs nach Anspruch 2, in welchem bei dem weiteren Kugelstrahlen die Geschosse bei einem Druck von wenigstens gleicher Höhe wie dem Druck des ersten, früheren Kugelstrahlens ausgetrieben werden.

13. Verfahren zur Vermeidung eines Abriebs nach Anspruch 2, in welchem, nachdem das Kugelstrahlen ausgeführt wurde, bei welchem die Geschosse aus einer Düse ausgetrieben werden, das nochmalige Kugelstrahlen durchgeführt wird, bei welchem Geschosse von einer Düse ausgetrieben werden und der Abstand von der Düse zur Oberfläche wenigstens so gering ist, wie der Abstand beim vorigen Kugelstrahlen.

14. Verfahren zur Vermeidung eines Abriebs nach Anspruch 2, in welchem das weitere Kugelstrahlen unter Verwendung von Korund-Silika-Kügelchen als Geschosse durchgeführt wird.

15. Verfahren zur Vermeidung eines Abriebs nach einem Anspruch, ausgewählt aus Anspruch 1 bis 10, in welchem jede konkave Senke einen im wesentlichen runden oberen Umkreis von 0,1 bis 5 µm hat.

16. Verfahren zur Vermeidung eines Abriebs nach einem Anspruch, ausgewählt aus Anspruch 1 bis 15, in welchem die Oberfläche des Bereichs eine Rauhigkeit hat, die höher ist, als diejenige der Oberfläche vor dem Kugelstrahlen.

17. Verfahren zur Vermeidung eines Abriebs nach Anspruch 16, in welchem nach dem Kugelstrahlen die Oberfläche eine Rauhigkeit von wenigstens einer Höhe von 0,1 µm hat.

## Revendications

1. Procédé pour empêcher une abrasion d'un objet métallique fabriqué en métal ferreux présentant une température de transformation A₃ ou fabriqué en métal non-ferreux présentant une température de recristallisation, ledit objet métallique possédant une partie que l'on soumet à une fonction coulissante, ladite partie présentant une surface, ledit procédé consistant à soumettre ladite partie dudit objet métallique à un grenaillage de façon à avoir pour résultat une formation d'un ensemble de creux concaves sur ladite surface de ladite partie, chaque creux présentant un profil en forme d'arc de cercle ;
caractérisé en ce que
(i)- on réalise ledit grenaillage d'une manière à entraîner une augmentation de température à la surface de ladite partie dudit objet métallique jusqu'à une température au moins aussi élevée que
(a) A₃, la température de transformation du métal dudit objet métallique dans le cas où l'on a fabriqué ledit objet métallique en un métal ferreux, ou
(b) la température de recristallisation dudit métal dudit objet métallique dans le cas où l'on a fabriqué ledit objet métallique en un métal non-ferreux ;
(ii)- ledit grenaillage consistant à projeter de la grenaille sous pression à une vitesse d'au moins 50 m/s, de sorte que ladite grenaille frappe ladite surface de ladite partie, ladite grenaille présentant une dureté au moins aussi élevée que celle dudit objet métallique, une forme sensiblement sphérique et une taille de 20 à 200 µm.

2. Procédé pour empêcher une abrasion selon la revendication 1, consistant en outre à soumettre ladite surface de ladite partie dudit objet métallique à au moins un grenaillage supplémentaire.

3. Procédé pour empêcher une abrasion selon la revendication 1 ou 2, dans lequel on réalise ledit traitement par grenaillage pour au moins une surface de ladite partie coulissante, coulissant de façon à toucher une autre surface.

4. Procédé pour empêcher une abrasion selon l'une quelconque des revendications 1 à 3, consistant en outre à alimenter ladite surface de ladite partie dudit objet métallique en huile lubrifiante, de façon à former un film d'huile sur ladite surface.

5. Procédé pour empêcher une abrasion selon l'une quelconque des revendications 1 à 4, dans lequel ladite grenaille est sphérique.

6. Procédé pour empêcher une abrasion selon l'une quelconque des revendications 1 à 5, dans lequel on chasse ladite grenaille à une vitesse de 100 à 200 m/s.

7. Procédé pour empêcher une abrasion selon l'une quelconque des revendications 1 à 6, dans lequel ladite taille de ladite grenaille est de 28 à 125 µm.

8. Procédé pour empêcher une abrasion selon l'une quelconque des revendications 1 à 7, dans lequel on chasse ladite grenaille par une buse présentant un diamètre intérieur de 5 à 9 mm.

9. Procédé pour empêcher une abrasion selon l'une quelconque des revendications 1 à 8, dans lequel la distance à partir de ladite buse jusqu'à ladite surface de ladite partie est de 150 à 200 mm.

10. Procédé pour empêcher une abrasion selon l'une quelconque des revendications 1 à 9, dans lequel on chasse ladite grenaille sous une pression de 3 à 6 kg/cm².

11. Procédé pour empêcher une abrasion selon l'une quelconque des revendications 1 à 10, dans lequel on fabrique ladite grenaille en métal, céramique ou verre.

12. Procédé pour empêcher une abrasion selon la revendication 2, dans lequel on chasse dans ledit grenaillage supplémentaire de la grenaille sous une pression au moins aussi élevée que la pression du premier grenaillage antérieur.

13. Procédé pour empêcher une abrasion selon la revendication 2, dans lequel après avoir réalisé ledit grenaillage dans lequel on chasse de la grenaille par une buse, on réalise ledit grenaillage supplémentaire dans lequel on chasse de la grenaille par une buse et la distance à partir de ladite buse jusqu'à ladite surface est au moins aussi faible que la distance dans le grenaillage antérieur.

14. Procédé pour empêcher une abrasion selon la revendication 2, dans lequel on réalise ledit grenaillage supplémentaire en utilisant pour ladite grenaille des billes de silicate d'alumine.

15. Procédé pour empêcher une abrasion selon l'une quelconque des revendications 1 à 10, dans lequel chaque creux concave présente un périmètre supérieur sensiblement circulaire de 0,1 à 5 µm.

16. Procédé pour empêcher une abrasion selon l'une quelconque des revendications 1 à 15, dans lequel ladite surface de ladite partie présente une rugosité supérieure à celle de ladite surface avant ledit grenaillage.

17. Procédé pour empêcher une abrasion selon la revendication 16, dans lequel, ladite surface présente après ledit grenaillage une rugosité au moins aussi élevée que 0,1 µm.
